# EUROPEAN PATENT APPLICATION

(11) **EP 4 810 290 A1**
(43) Date of publication of application: **23.09.2026**
(21) Application number: 26165905.6
(22) Date of filing: 18.03.2026
(51) Int. Cl.: B60K 6/48, B60W 10/06, B60W 10/08, B60W 10/26, B60W 20/10, B60W 20/11, B60W 20/13, B60W 20/50, B60W 30/188, B60W 50/029, B60W 50/038

(54) **SYSTEM AND METHOD FOR SHARING LOAD BETWEEN TWO OR MORE INDEPENDENT ENGINES**

(30) Priority: 18.03.2025 US 202519082952
(71) Applicant: Pratt & Whitney Canada Corp., Longueuil, Québec J4G 1A1 (CA)
(72) Inventor: FREER, Richard, (01BE5) Longueuil, J4G 1A1 (CA); LU, Xuening, (01BE5) Longueuil, J4G 1A1 (CA)
(74) Representative: Dehns

(57) **Abstract**

A method may include determining, via a load sharing management operation (212) of a controller, a target steady state load share for an associated one of a thermal engine (108) or an electric motor system (110) of a hybrid electric powertrain (HEP). The method may also include operating, by the controller, the associated one of the thermal engine (108) or the electric motor system (110) according to the target steady state load share. The method may also include determining, by the controller, that a measured load for the associated one of the thermal engine (108) or the electric motor system (110) does not meet the target steady state load share. The method may also include adjusting, by the controller, a control setting of the associated one of the thermal engine (108) or the electric motor system (110), resulting in an adjusted load output of the associated one of the thermal engine (108) or the electric motor system (110).

## Description

### TECHNICAL FIELD

This invention generally relates to hybrid electric powertrains. More specifically, this invention relates to systems and methods for sharing load between two or more independent engines.

### BACKGROUND

A hybrid electric powertrain (HEP) system includes multidisciplinary technologies of electrical (e.g., electrical motors/generators, energy storage system/ distribution/charging system - batteries, charger/high voltage distribution unit etc.) and mechanical components (e.g., main rotor, propeller, etc.). Modern control system techniques and methodologies therefore plays important roles in HEP technology.

### SUMMARY

This invention relates to systems and methods for sharing load between two or more independent engines.

According to an aspect of the invention, a method (for example, for/of sharing load between two or more independent engines, such as a thermal engine and an electric motor system) may include determining, via a load sharing management operation of a controller, and based on one or more factors, a target steady state load share for an associated one of a thermal engine or an electric motor system of a hybrid electric powertrain (HEP), the thermal engine and the electric motor system each having a mechanical output coupled to a common power shaft of the HEP. The method may also include operating, by the controller, the associated one of the thermal engine or the electric motor system according to the target steady state load share. The method may also include determining, by the controller, that a measured load for the associated one of the thermal engine or the electric motor system does not meet the target steady state load share. The method may also include adjusting, by the controller, and based on the target steady state load share, a control setting of the associated one of the thermal engine or the electric motor system, resulting in an adjusted load output of the associated one of the thermal engine or the electric motor system.

In an embodiment of the above, the method further comprises determining, by another controller via another load sharing management operation executed by the other controller, another target steady state load share for the other one of the thermal engine or the electric motor system, wherein the other one of the thermal engine or the electric motor system is associated with the other controller.

In an embodiment of any of the above, the controller is associated with the thermal engine, and the method further comprises applying, by the controller, a positive bias to a load share of the thermal engine, wherein the positive bias causes a speed governing operation of the electric motor system to set a load of the electric motor system to a negative value, and causes recharging of a battery associated with the electric motor system in response to the setting of the load of the electric motor system to the negative value.

In an embodiment of any of the above, the controller is associated with the thermal engine, and the method further comprises applying, by the controller, a negative bias to a load share of the thermal engine to skew, according to a shaft speed governing operation of the controller, a load of the electric motor system to a positive value to avoid a reduction in power or torque of the electric motor system below a threshold amount.

In an embodiment of any of the above, the controller is associated with the electric motor system, and the method further comprises applying, by the controller, a positive bias to a load share of the electric motor system to avoid a reduction in power or torque of the electric motor system below a threshold amount.

In an embodiment of any of the above, the control setting of the associated one of the thermal engine or the electric motor system is increased gradually based on the target steady state load share.

In an embodiment of any of the above, the control setting of the associated one of the thermal engine or the electric motor system is increased according to a control gain schedule, wherein the control gain schedule is based on at least one of operation conditions or load conditions of the associated one of the thermal engine or the electric motor system.

In an embodiment of any of the above, the method further comprises determining that a shaft speed of the HEP exceeds a shaft speed reference; and reducing, via a speed governing operation separate from the load sharing management operation, the control setting of the associated one of the thermal engine or the electric motor system.

In an embodiment of any of the above, the one or more factors include at least one of: a power demand of the HEP; a total load demand of the HEP; a maximum load limit for the thermal engine; a minimum load limit for the electric motor system; a maximum load limit for the electric motor system; a minimum negative load limit for the electric motor system; a state of charge of a battery associated with the electric motor system; a battery recharge rate limit of the battery; or a temperature of the battery associated with the electric motor system.

In an embodiment of any of the above, the HEP includes one or more thermal engines and a plurality of electric machines of the electric motor system, and each one of a plurality of controllers is associated with one of the one or more thermal engines or one of the plurality of electric machines, to operate the associated thermal engine or the associated electric machine according to an associated target steady state load share.

According to another aspect of the invention, a system (for example, for sharing load between two or more independent engines, such as a thermal engine and an electric motor system) may include a controller configured to determine, via a load sharing management operation and based on one or more factors, a target steady state load share for an associated one of a thermal engine or an electric motor system of a hybrid electric powertrain (HEP), the thermal engine and the electric motor system each having a mechanical output coupled to a common power shaft of the HEP. The controller may also be configured to operate the associated one of the thermal engine or the electric motor system according to the target steady state load share. The controller may also be configured to determine that a measured load for the associated one of the thermal engine or the electric motor system does not meet the target steady state load share. The controller may also be configured to adjust, based on the target steady state load share, a control setting of the associated one of the thermal engine or the electric motor system, resulting in an adjusted load output of the associated one of the thermal engine or the electric motor system.

Any single one or any combination of the following features may be used with the aspect of the invention or embodiments above, and in particular with the aspect of the invention directed towards the system. Another controller may determine, via another load sharing management operation executed by the other controller, another target steady state load share for the other one of the thermal engine or the electric motor system, wherein the other one of the thermal engine or the electric motor system is associated with the other controller. The controller may be associated with the thermal engine and may be further configured to apply a positive bias to a load share of the thermal engine, wherein the positive bias causes a speed governing operation of the electric motor system to set a load of the electric motor system to a negative value, and causes recharging of a battery associated with the electric motor system in response to the setting of the load of the electric motor system to the negative value. The controller may be associated with the thermal engine and may be further configured to apply a negative bias to a load share of the thermal engine to skew, according to a shaft speed governing operation of the controller, a load of the electric motor system to a positive value to avoid a reduction in power or torque of the electric motor system below a threshold amount. The controller may be associated with the electric motor system and may be further configured to apply a positive bias to a load share of the electric motor system to avoid a reduction in power or torque of the electric motor system below a threshold amount. The control setting of the associated one of the thermal engine or the electric motor system may be increased gradually based on the target steady state load share. The control setting of the associated one of the thermal engine or the electric motor system may be increased according to a control gain schedule, wherein the control gain schedule is based on at least one of operation conditions or load conditions of the associated one of the thermal engine or the electric motor system. The controller may also determine that a shaft speed of the HEP exceeds a shaft speed reference, and reduce, via a speed governing operation separate from the load sharing management operation, the control setting of the associated one of the thermal engine or the electric motor system. The one or more factors include at least one of a power demand of the HEP, a total load demand of the HEP, a maximum load limit for the thermal engine, a minimum load limit for the electric motor system, a maximum load limit for the electric motor system, a minimum negative load limit for the electric motor system, a state of charge of a battery associated with the electric motor system, a battery recharge rate limit of the battery, or a temperature of the battery associated with the electric motor system. The HEP may include one or more thermal engines and a plurality of electric machines of the electric motor system, and each one of a plurality of controllers is associated with one of the one or more thermal engines or one of the plurality of electric machines, to operate the associated thermal engine or the associated electric machine according to an associated target steady state load share.

In various embodiments, a non-transitory machine readable medium can include instructions that when executed cause the controller(s) described above to perform the operations described above.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIG. 1 illustrates a schematic view of a hybrid electric powertrain (HEP) system in accordance with this disclosure;
FIG. 2 illustrates an example HEP engine control architecture in accordance with this disclosure;
FIG. 3 illustrates another example HEP engine control architecture in accordance with this disclosure;
FIG. 4 illustrates another example HEP engine control architecture in accordance with this disclosure;
FIG. 5 illustrates an example method for load sharing control in accordance with this disclosure; and
FIG. 6 illustrates an example method for load sharing control and electric motor system battery management in accordance with this disclosure.

### DETAILED DESCRIPTION

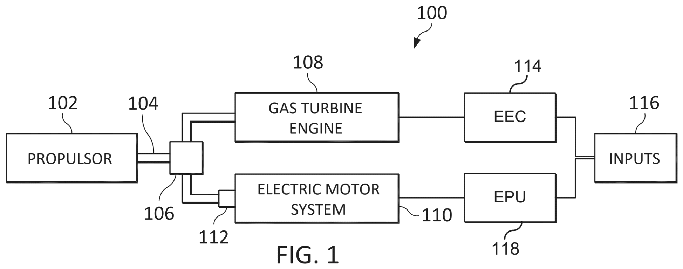

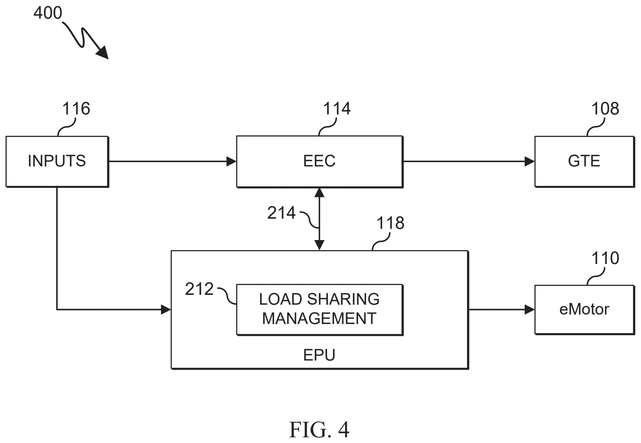

FIGS. 1 through 6, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As stated above, a hybrid electric powertrain (HEP) system includes multidisciplinary technologies of electrical (e.g., electrical motors/generators, energy storage system/ distribution/charging system - batteries, charger/high voltage distribution unit etc.) and mechanical components (e.g., main rotor, propeller, etc.). Modern control system techniques and methodologies therefore plays important roles in HEP technology.

Such multi-engine propulsion systems that drive a common propulsor designed to operate at a governed speed rely on control systems to maintain the governed speed and also manage the sharing of the load between the engines. For safety reasons, it can be desirable that torque/load matching logic does not result in a reduction of overall power and allows each engine to remain independent.

This disclosure applies the above principles to hybrid propulsion systems having a mix of thermal engines and electric motor(s) and provides for systems and methods for sharing torque between two or more independent engines.

FIG. 1 illustrates a schematic view of a HEP system 100 in accordance with this disclosure. In the example of FIG. 1, system 100 includes a propulsor 102. For example, propulsor 102 may be a propeller for a propeller driven aircraft, a main rotor for a helicopter, etc. Propulsor 102 receives power via a common power shaft 104. Power shaft 104 is mechanically coupled to the mechanical output of a gas turbine engine 108 (e.g., an aero-turbo engine with free turbines) (also referred to as a thermal engine in this disclosure) via a gearbox 106. The power shaft 104 is also mechanically coupled to the mechanical output of an electric motor system 110. The electric motor system can include one electric machine or a plurality of electric machines including at least one electric motor or motor/generator, at least one motor controller such as an electric powertrain controller, at least one electrical energy storage system (at least one battery or supercapacitor), at least one electric power distribution system, etc. In some embodiments, electric motor system 110 may include a coupling system 112 (e.g., a clutch) that may couple and decouple the mechanical output of electric motor system 110. For example, coupling system 112 could be an overrunning clutch, a connecting/disconnecting clutch, etc. During operation of HEP system 100, gas turbine engine 108 and electric motor system 110 can be controlled via one or more controller(s) based on feedback from inputs 116, including to execute one or more load sharing algorithms. For example, as shown in FIG. 1, in some embodiments, the system 100 can include a separate electronic engine control (EEC) 114 for controlling gas turbine engine 108, and a separate motor controller, such as an electric powertrain controller (EPU) 118, for controlling electric motor system 110. As described in the various embodiments of this disclosure, one or both of the EEC 114 and the EPU 118 can include torque/load sharing logic. In some embodiments, one or more external controllers such as a hybrid propulsion system controller, or a controller in the avionics system(s), could be used to control the gas turbine engine 108 and/or the electric motor system 110. In some embodiments, torque load sharing logic can be performed by an external controller, but, in case the external controller fails, a backup mode of operation can be provided in which one or more other internal controllers, such as an EEC and/or an EPU, can start performing the load sharing algorithms in response to a detected failure of the external controller(s).

In some embodiments, the backup operation mode could, additionally or alternatively, include that the electric motor may only be turned on to minimize rotor droop events such as making its torque setting proportional to a minimum % speed percentage minus an actual speed percentage. For instance, in some embodiments, torque demand based on shared torque logic for the electric motor system can also be included for automatic propulsor shaft speed droop recovery control, with additional consideration of electric motor system failures.

Although FIG. 1 illustrates one example of operation of a HEP system 100, various changes may be made to FIG. 1. For example, while FIG. 1 shows that the mechanical outputs of gas turbine engine 108 and electric motor system 110 are mechanically coupled to power shaft 104 via gearbox 106, in some embodiments either or both outputs of gas turbine engine 108 and electric motor system 110 may be directly coupled to power shaft 104, gas turbine engine 108 and electric motor system 110 may be coupled via separate gearboxes, additional components (e.g., shafts, transmissions, etc.) etc.

Hybrid electric powertrain control problems are complicated and moreover, they are generally nonlinear, exhibit fast parameter variation, and operate under uncertain and/or changing conditions. To achieve the maximal fuel economy, meet emission standards within the aircraft operating envelope, maintain target speeds, etc., a HEP system employs complex control strategies to meet the operability/safety requirements. The control challenges are associated not only with the thermal engine, the electric motor/converter and the energy storage system, but also with the energy management strategy determining how to split the aircraft's required power/torque between the combustion engine and the electric motor/generator.

Currently, the aviation industry is developing/prototyping hybrid electric powertrain control systems based on a distributed architecture in which, the thermal engine (e.g., jet turbine engine) electronic controller (EEC) and electric powertrain controller (EPU) are generally separated as two units and primary control functions and sensor feedback are communicated via serial communication (e.g. CAN or ARINC BUS). The Thermal engine/electric powertrain control strategy is generally speed governing (e.g., turboshaft, turboprop and turbogenerator) with dynamic limiting controls with respect to thermal engine mechanical limits (e.g., torque) and thermal limits (e.g., ITT) and electrical powertrain mechanical limits (e.g., torque) and electrical limits (e.g., current).

The present disclosure provides various embodiments of a HEP control system that uses a load sharing algorithm to determine a desired steady state load share of the turboshaft engine. This disclosure provides for independent engines to operate according to the load sharing algorithm such that the independent engines govern their output shaft speed while monitoring the remote engine's torque and increasing its torque if it is, for example, the lower-torque engine, thereby ensuring that torque matching logic does not remove power. This is because, for safety reasons, a reduction in overall power during operation is to be avoided, and so torque controls for thermal engines and electric motors of this disclosure aim to manage torque by increasing torque, rather than decreasing torque, while leaving it to separate speed governing loops to decrease torque if needed. Additionally, in various situations it is desirable to allow the electric motor to provide reduced torque as compared to the thermal engine, so that the battery associated with the electric motor is not overly discharged during operation. Various embodiments of this disclosure also provide for the application of various biases to thermal engine torque and/or electric motor torque to control electric motor energy output, control electric motor battery recharging, and/or to avoid an electric motor operating at zero torque.

As described with respect to FIG. 1, the system can have one or more thermal engines and one or more electric motors, all contributing to driving a common propulsor or coupled drivetrain. Each engine and motor can be responsible for governing its own speed and for satisfying the pre-determined load sharing algorithm or rule that can target an equal or unequal loading between the engines and motors.

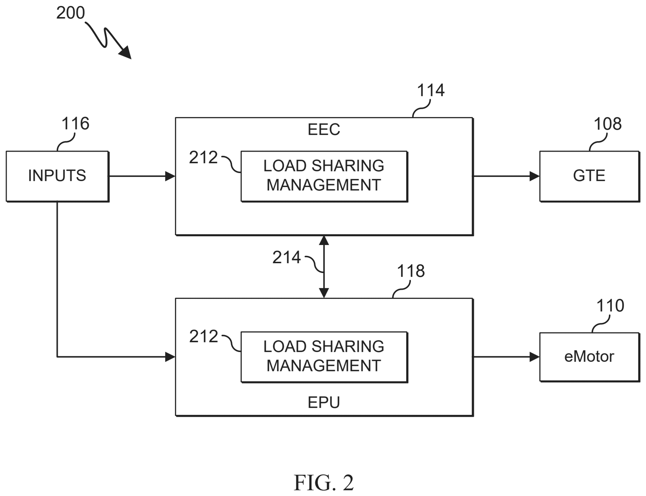

In various embodiments, both the EEC 114 and the EPU 118 include a load sharing algorithm that will determine the desired steady-state load share of the respective turboshaft engine and electric motor, considering external factors (such as state of charge of the battery and charging power limits, or battery temperature), or the requested charge current from an external system such as avionics systems and/or battery management systems (BMS). For example, FIG. 2 illustrates an example HEP engine control architecture 200 in accordance with this disclosure. In the example of FIG. 2, architecture 200 is implemented in HEP system 100, though architecture 200 could be employed in any HEP system. As shown in FIG. 2, in some embodiments, both the EEC 114 and the EPU 118 can execute separate load sharing management operations 212.

As shown in FIG. 2, the architecture 200 includes an EEC 114 for controlling gas turbine engine 108. The EEC 114 may include a cascaded engine speed governing with dynamic limiter topping control architecture. The EEC 114 may include engine nominal and protection control functions around a speed governing loop and a torque governing loop. Architecture 200 also includes an EPU 118 for controlling electric motor system 110. EPU 118 may also include a cascaded control architecture, where the shaft speed governing of electric motor system 110 is the outer loop and current control is the inner loop for torque regulation.

Hybrid operation of both powertrain systems utilizes power/speed management operations and load sharing management operations 212 to collaborate the power/torque load sharing strategy (e.g., a load sharing algorithm) between the gas turbine engine 108 and the electric motor system 110. In various embodiments, sensor(s) feedback can be communicated via digital communication 214 between the EEC 114 and the EPU 118 (e.g., a CAN BUS) to allow the EEC 114 and the EPU 118 to share data on their respective current states. For example, the EEC 114 of the gas turbine engine 108 can send its actual torque or load share to the electric EPU 118 as input (either directly from the EEC 114 or from aircraft controls). Likewise, the electric motor system status and estimated electric motor torque can be sent by the EPU 118 to the EEC 114, either directly from the EPU 118 or from aircraft controls.

In various embodiments, the EEC 114 can control the gas turbine engine 108 according to the load sharing management operation 212, and the EPU 118 can also control the electric motor according to the load sharing management operation 212. The load sharing management operation 212 of this disclosure can provide for various logical parameters and functions that govern the shared torque load between the thermal engine 108 and the electric motor system 110.

In the example of FIG. 2, the load sharing management operation 212 manages the torque demand requests and torque limits for gas turbine engine 108 and electric motor system 110, with respect to inputs 116 such as a power request, collective and pedal inputs for a turboshaft, ambient conditions, hybrid mode selection, battery state of charge status, etc. For instance, the gas turbine engine 108 target torque can be determined based on inputs 116 (e.g., aircraft power request, collective and pedal positions from a turboshaft at various altitude and propulsor speed setpoints [e.g., rotor speed reference]), and constraints by gas turbine engine 108's own mechanical/thermal limits at a given engine core operating speed (e.g., inner gas generator speed with respect to propulsor speed governing and gas turbine torque limiter control). The residual of required aircraft torque to be provided by electric motor system 110 (electrical powertrain torque demand) can be calculated using the load sharing algorithm of the load sharing management operation 212 in the EPU 118, based on the difference of total torque required and the gas turbine engine demand/output up to the maximum engine mechanical and/or thermal limits of gas turbine engine 108. Similarly, the EEC 114 can use its separate load sharing management operation 212 to determine the amount of torque it should provide based on the inputs 116 that includes current operating state data of the electric motor system 110.

Thus, the load sharing management operations 212 execute in a manner to set the same torque shared load targets, and the EEC 114 and the EPU 118 communicate their respective measured loads to the other. The EEC 114 separately controls and sets load sharing targets for the thermal engine 108, and the EPU 118 separately controls and sets load sharing targets for the electric motor system 110. Thus, the EPU 118 for the electric motor system 110 can operate a similar load sharing algorithm that results in the same outcome as the algorithm in the EEC 114 load sharing algorithm. This allows the load share of the thermal engine and the electric motor to be independently controlled via the EEC 114 and the EPU 118.

Although FIG. 2 illustrates one example of a HEP engine control architecture 200, various changes may be made to FIG. 2. For example, while FIG. 2 illustrates an example where the load sharing management operation 212 is performed by both the EEC 114 and the EPU 118, in some embodiments, the load sharing management operation 212 can be performed by other components, or other components can execute separate torque management operations in addition to the torque management operation executed by the EEC.

In some embodiments, just the EEC 114 can include a load sharing algorithm that will determine the desired steady-state load share of the turboshaft engine, considering external factors (such as state of charge of the battery and charging power limits, battery temperature), or the requested charge current from an external system such as avionics systems and/or battery management systems (BMS). For instance, FIG. 2 illustrates an example HEP engine control architecture 200 in accordance with this disclosure. In the example of FIG. 2, architecture 200 is implemented in HEP system 100, though architecture 200 could be employed in any HEP system.

In the example of FIG. 2, the EEC 114 includes the load sharing management operation 212, which manages the torque demand requests and torque limits for gas turbine engine 108 with respect to inputs 116 such as a power request, collective and pedal inputs for a turboshaft, ambient conditions, hybrid mode selection, battery state of charge status, etc. For instance, the gas turbine engine 108 target torque can be determined based on inputs 116 (e.g., aircraft power request, collective and pedal positions from a turboshaft at various altitude and propulsor speed setpoints [e.g., rotor speed reference], current electric motor system parameters such as battery charge, electric motor system torque, etc.), and constraints by gas turbine engine 108's own mechanical/thermal limits at a given engine core operating speed (e.g., inner gas generator speed with respect to propulsor speed governing and gas turbine torque limiter control). In this way, the EEC 114's load sharing management operation can determine its own load share based on the various data accessible to the EEC 114 concerning its operating state and the operating state of the electric motor system 110.

In some embodiments, as described above, the EEC 114's load sharing management operation 212 may only control the EEC 114's target load share. However, although it may be desirable in many cases to keep load share control of the thermal engine and the electric motor separate and independent, in some embodiments, the load sharing management operation 212 of the EEC 114 can also control a target load share of the electric motor system. For example, in such embodiments, the residual of required aircraft torque to be provided by electric motor system 110 (electrical powertrain torque demand) can be calculated using the load sharing algorithm of the load sharing management operation 212 in the EEC 114, based on the difference of total torque required and the gas turbine engine demand/output up to the maximum engine mechanical and/or thermal limits of gas turbine engine 108. Here, the load sharing management operation 212 is performed by the EEC 114 and target load share is reported by the EEC 114 to the electric motor system 110 via the EPU 118.

Although FIG. 2 illustrates one example of a HEP engine control architecture 200, various changes may be made to FIG. 2. For example, while FIG. 2 illustrates an example where the load sharing management operation 212 is performed by the EEC 114, in some embodiments, the load sharing management operation 212 can be performed by other components, or other components can execute separate torque management operations in addition to the torque management operation executed by the EEC.

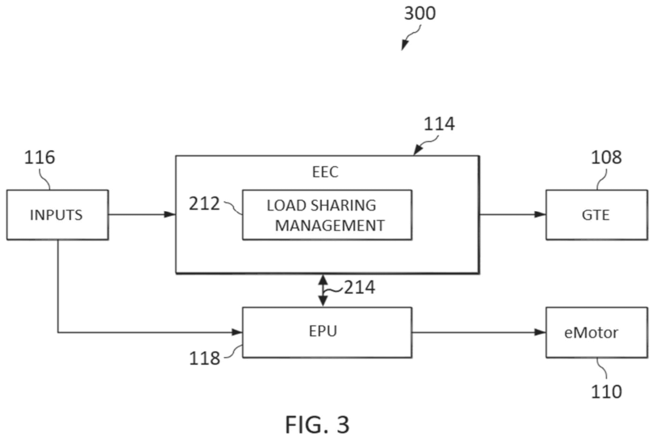

For example, FIG. 3 illustrates another example HEP engine control architecture 300 in accordance with this disclosure. In the example of FIG. 3, architecture 300 is implemented in HEP system 100, though architecture 300 could be employed in any HEP system. As shown in FIG. 3, in some embodiments, the load sharing management operation 212 can be performed by just the EPU 118. In such embodiments, the functional control structure is similar to what is described in FIG. 2, except that just the EPU 118 executes the load sharing management operation 212 to control target torque load of the electric motor, based on data received over link 214, such as current operating conditions of the gas turbine engine 108.

In some embodiments, as described above, the EPU 118's load sharing management operation 212 may only control the EPU 118's target load share. However, although it may be desirable in many cases to keep load share control of the thermal engine and the electric motor separate and independent, in some embodiments, the load sharing management operation 212 of the EPU 118 can also control a target load share of the gas turbine engine 108. For example, in such embodiments, the residual of required aircraft torque to be provided by gas turbine engine 108 can be calculated using the load sharing algorithm of the load sharing management operation 212 in the EPU 118, based on the difference of total torque required and the gas turbine engine demand/output up to the maximum engine mechanical and/or thermal limits of gas turbine engine 108. Here, the load sharing management operation 212 is performed by the EEC 114 and target load share is reported by the EEC 114 to the electric motor system 110 via the EPU 118.

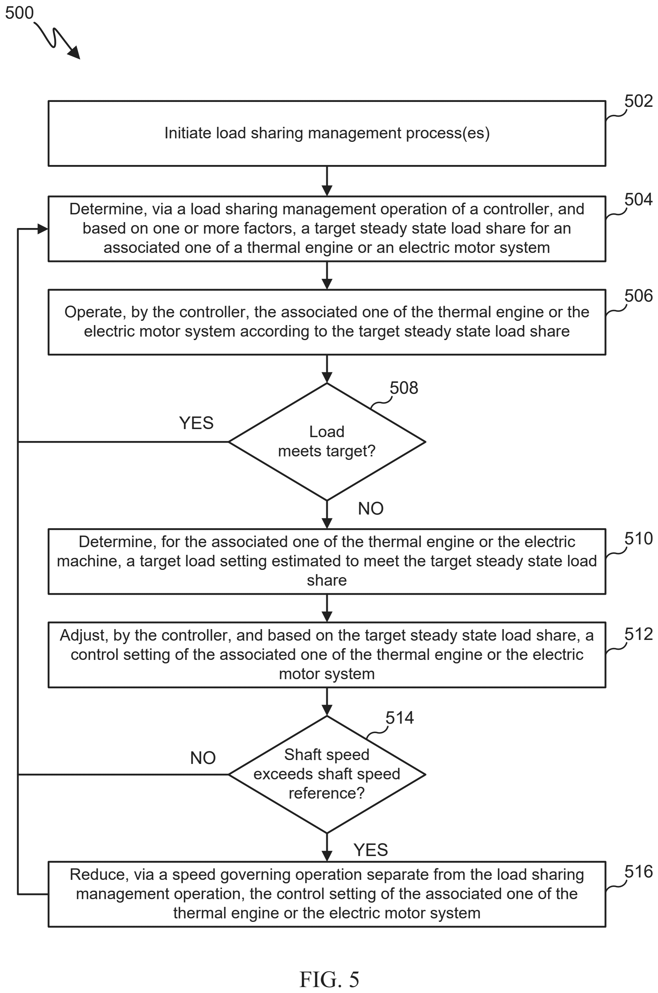

In various embodiments of this disclosure, the load sharing management operation(s) 212 is used to trigger increases in torque output settings for the thermal engine 108 and/or the electric motor system 110 based on various factors to meet a torque load share provided by the load sharing management operation 212. For instance, FIG. 5 illustrates an example method 500 for load sharing control in accordance with this disclosure. The method 500 may be performed by any of the architectures 200, 300, or 400 of FIGS. 2, 3, or 4. For ease of explanation, the method 500 shown in FIG. 5 may be described as being implemented or supported using a controller or processor. For example, method 500 may be implemented in or supported by controller(s) such as the EEC 114 and/or the EPU 118. However, the method 500 shown in FIG. 5 may be implemented or supported by any suitable device(s) and in any suitable system(s).

As shown in FIG. 5, the method 500 includes, at step 502, initiating at least one load sharing management process, such as the load sharing management operation 212. Step 502 can occur, for example, upon, or soon after, power on of an aircraft so that the torque sharing management processes can be in operation as soon as any operational power is requested. It will be understood that the load sharing management processes can continuously run while the aircraft is powered on. As described in this disclosure, a single load sharing management process can be executed, such as by one of the EEC 114, the EPU 118, or an external controller, or multiple load sharing management processes can be executed, such as by each of the EEC 114 or the EPU 118.

At step 504, a target steady state load share is determined by a controller for an associated one of a thermal engine and an electric motor system. For example, the controller can be the EEC 114 that is configured to determine a target steady state load share for the EEC 114's associated thermal engine. The controller may also be the EPU 118 that is configured to determine a target steady state load share for the EPU 118's associated electric motor. This determination can be based on one or more factors, such as at least one of a target power/speed, a power demand of the HEP, a total load demand of the HEP, a maximum load limit for the thermal engine, a minimum load limit for the electric motor system, a maximum load limit for the electric motor system, a state of charge of a battery associated with the electric motor system, or a temperature of the battery associated with the electric motor system, etc.

At step 506, the associated one of the thermal engine or the electric motor system are operated according to the target steady state load share. For example, if the target torque for the HEP system is 100 nm, in some cases, the controller (e.g., the EEC 114) may be associated with the thermal engine and could instruct the thermal engine to provide 100 nm of torque to limit use of the electric motor system and thus use of the electric motor system's battery. As described in this disclosure, in various embodiments, another controller (e.g., the EPU 118) could operate the electric motor system according to its own load sharing operation. For instance, in addition to the first controller, the method 500 could involve another controller that may determine, via another load sharing management operation executed by the other controller, another target steady state load share for the other one of the thermal engine or the electric motor system, where the other one of the thermal engine or the electric motor system is associated with the other controller.

For example, a controller of the electric motor system (e.g., the EPU 118) can request an amount of torque from the electric motor system that is just enough to compensate for an amount of torque the thermal engine is not able to provide at any given time. However, in some cases it may be that the torque the thermal engine is able to provide is limited, and thus the electric motor system can provide some amount of torque, e.g., 10 nm of torque from the electric motor system, while the thermal engine provides 90 nm of torque. It will be understood that these are just examples, and the torque load share between the thermal engine and the electric motor can vary as needed. It will be understood that the steady state load share can be affected by the target speed, and that the thermal engine and electric motor are also operated according to a target speed as governed by separate speed governing operations.

At step 508, it is determined, by the controller, whether a measured load as communicated by associated sensors for the associated one of the thermal engine or the electric motor system does meets the target steady state load share. If so, the method 500 loops back to step 504 so that the method continues to dynamically set the load share and monitor whether a load share change is needed. At step 508, if it is determined that the measured load does not meet the target steady state load share, the method moves to step 510. At step 510, a target load setting is determined for the associated one of the thermal engine or the electric motor system. At step 512, the controller, based on the target steady state load share, adjusts a control setting of the associated one of the thermal engine or the electric motor system, resulting in an adjusted load output of the associated one of the thermal engine or the electric motor system. For example, if the controller of the electric motor system observes that its estimated torque is lower than (the torque required for speed governing) + (torque sharing logic bias), it can gradually increase its torque setting to meet the load sharing target.

Likewise, if the controller of the thermal engine detects that its torque is lower than the value calculated by the load sharing algorithm, it can, independently from the electric motor system, determine to increase its torque. In some embodiments, instead of increasing torque, the thermal engine could adjust its power, fuel flow, compressor speed target, etc., depending on the control rules structure of the engine control. In some embodiments, the engine or motor with the lower percentage torque thus may be the one to increase its torque, but situations may arise where this may not be the case, such as if the electric motor system battery is at a state of charge below a threshold state of charge, in which case the thermal engine may increase its torque so to reduce use of the electric motor system battery. The increase in torque at step 512 is gradual because the rate of change or gains for the load sharing algorithm should be slow so that there is no interference with speed governing loops.

Additionally, the load sharing management process(es) can be aware of the torque limits of each engine/motor such that it does not cause either engine/motor to go beyond its torque limits. In various embodiments, the load sharing management process(es) can also consider the health and operating limits of the thermal engine and electric motor system to avoid pushing one of them to its limits. In some embodiments, instead of increasing the control setting gradually, the control setting of the associated one of the thermal engine or the electric motor system can be increased according to a control gain schedule, wherein the control gain schedule is based on at least one of operation conditions or load conditions of the associated one of the thermal engine or the electric motor system.

In some embodiments, the method 500 can also include steps 514 and 516 as shown in FIG. 5. At step 514, it is determined whether a current shaft speed of the HEP exceeds a shaft speed reference value. If not, the method 500 loops back to step 504 so that the method continues to dynamically set the load share and monitor whether a load share change is needed. If, however, it is determined at step 514 that the shaft speed does exceed the shaft speed reference value, the method 500 moves to step 516. At step 516, the controller can reduce, via a speed governing operation separate from the load sharing management operation, the control setting of the associated one of the thermal engine or the electric motor system, to maintain the shaft speed based on the shaft speed reference. For instance, in some embodiments, if the torque increase results in the shaft speed exceeding a shaft speed reference, separate fast-acting speed governing loops (which can be active in both the thermal engine and the electric motor system controllers) will pull back on torque to maintain shaft speed. This way, the load sharing algorithm never pulls back on power, but appropriate speed can be maintained. That is, in various embodiments, the speed governing logic pulls back on power, not the torque load sharing management process(es). After step 516, the method can loop back to step 504 so that the method continues to dynamically set the load share and monitor whether a load share change is needed.

Although FIG. 5 illustrates one example of a method 500 for load sharing control, various changes may be made to FIG. 5. For example, while shown as a series of steps, various steps in FIG. 5 could overlap, occur in parallel, occur in a different order, occur any number of times, be omitted, or be replaced by other steps. As one particular example, the HEP can include one or more thermal engines and a plurality of electric machines of the electric motor system, and each one of a plurality of controllers can be associated with one of the one or more thermal engines or one of the plurality of electric machines, to operate the associated thermal engine or the associated electric machine according to an associated target steady state load share. That is, there could be multiple thermal engines and/or multiple electric motors that are each controller by their own associated controller that can implement a separate load sharing operation, such that the thermal engines and electric motors can all be operated independently.

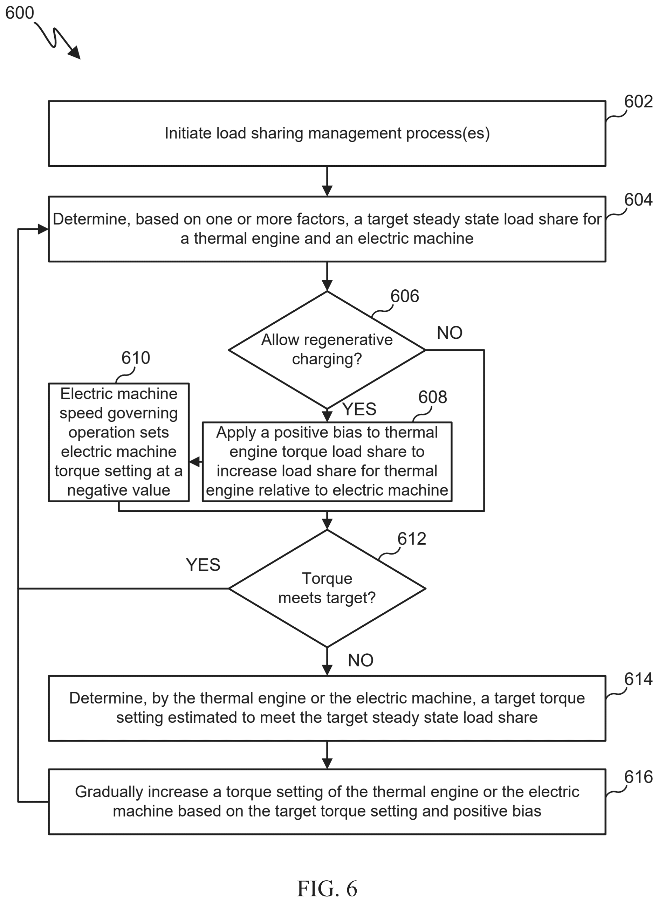

As another example, various biases could be applied by the load sharing operation(s). For instance, the controller (or one of the controllers) may be associated with the thermal engine, and the method 500 could also include applying, by the controller, a positive bias to a load share of the thermal engine, where the positive bias causes a speed governing operation of the electric motor system to set a load of the electric motor system to a negative value, and causes recharging of a battery associated with the electric motor system in response to the setting of the load of the electric motor system to the negative value. As another example, the controller (or one of the controllers) may be associated with the thermal engine, and the method 500 could also include applying, by the controller, a negative bias to a load share of the thermal engine to skew, according to a shaft speed governing operation of the controller, a load of the electric motor system to a positive value to avoid a reduction in power or torque of the electric motor system below a threshold amount. As yet another example, the controller (or one of the controllers) may be associated with the electric motor system and the method 500 could include applying, by the controller, a positive bias to a load share of the electric motor system to avoid a reduction in power or torque of the electric motor system below a threshold amount. An example application of a positive bias on the thermal engine load is described with respect to FIG. 6.

FIG. 6 illustrates an example method 600 for load sharing control and electric motor system battery management in accordance with this disclosure. The method 600 may be performed by any of the architectures 200, 300, or 400 of FIGS. 2, 3, or 4. For ease of explanation, the method 600 shown in FIG. 6 may be described as being implemented or supported using a controller or processor. For example, method 600 may be implemented in or supported by controller(s) such as the EEC 114. However, the method 600 shown in FIG. 6 may be implemented or supported by any suitable device(s) and in any suitable system(s).

As shown in FIG. 6, the method 600 includes, at step 602, initiating at least one load sharing management process, such as the load sharing management operation 212. Step 602 can occur, for example, upon, or soon after, power on of an aircraft so that the torque sharing management processes can be in operation as soon as any operational power is requested. It will be understood that the load sharing management processes can continuously run while the aircraft is powered on. As described in this disclosure, a single load sharing management process can be executed, such as by one of the EEC 114 or via an external controller, or multiple load sharing management processes can be executed, such as by each of the EEC 114 or the EPU 118.

At step 604, a target steady state load share is determined by a controller (e.g., the EEC 114) associated with a thermal engine and an electric motor system. As described in this disclosure, this determination can be based on one or more factors, such as target power/speed, overall HEP torque demand, a maximum torque limit for one or both of the thermal engine and the electric motor system, battery state of charge and/or charging power limits for the electric motor system, battery temperature for the electric motor system, etc. At step 606, it is determined whether to allow regenerative charging of the electric motor system's battery. If not, the method 600 moves to step 612. If so, at step 608, a positive bias is applied by the load sharing management process of the controller to the thermal engine torque load share to increase thermal engine torque share relative to the electric motor system. In various embodiments, this additional bias to the thermal engine's torque is used to assist with managing the state of charge of the electric motor system's battery. For example, applying the bias to the thermal engine torque can result in excess torque from the thermal engine. To maintain speed, at step 610, the electric motor system's speed governing loop sets the electric motor system torque setting to a negative value. Thus, the electric motor system's speed governing loop allows the electric motor system to go to negative torque, thereby recharging the battery via a regenerative charging system. Since, generally, changes to electric motor system torque occurs more quickly than changes to thermal engine torque, use of the positive bias allows for the thermal engine to constantly include more torque in its torque setting to prevent situations in which the electric motor system more quickly decides to increase its torque before the thermal engine can choose to do so. In various embodiments, the determination at step 606 can be influenced by factors such as the current measured state of charge of the electric motor system's battery, a temperature of the battery, or a minimum load limit of the electric motor.

After step 610, the method 600 moves to step 612. At step 612, it is determined whether the current actual load as communicated by the sensors associated with each of the thermal engine and the electric motor system meets the target load share as determined by each of the controllers associated with the thermal engine or the electric motor. If so, the method 600 loops back to step 604 so that the method continues to dynamically set the load share and monitor whether a load share change is needed.

At step 612, if it is determined that the torque does not meet the target torque load, the method moves to step 614. At step 614, a target torque setting is determined for the thermal engine or the electric motor system. At step 616, a current torque setting for the thermal engine or the electric motor system is gradually increased based on the target torque setting. For example, if the controller of the electric motor system observes that an estimated electric motor torque is lower than (the torque required for speed governing) + (torque sharing logic bias), it can gradually increase its torque setting to meet the load sharing target.

Likewise, if the controller of the thermal engine detects that a torque of the thermal engine is lower than the value calculated by the load sharing algorithm, it can, independently from the electric motor system, determine to increase its torque. In some embodiments, instead of increasing torque, the thermal engine could adjust its power, fuel flow, compressor speed target, etc., depending on the control rules structure of the engine control. In some embodiments, the engine or motor with the lower percentage torque thus may be the one to increase its torque, but situations may arise where this may not be the case, such as if the electric motor system battery is at a state of charge below a threshold state of charge, in which case the thermal engine may increase its torque so to reduce use of the electric motor system battery. The increase in torque at step 616 is gradual because the rate of change or gains for the load sharing algorithm should be slow so that there is no interference with speed governing loops. Additionally, the load sharing management process(es) can be aware of the torque limits of each engine/motor such that it does not cause either engine/motor to go beyond its torque limits. In various embodiments, the load sharing management process(es) can also consider the health and operating limits of the thermal engine and electric motor system to avoid pushing one of them to its limits. After step 616, the method 600 loops back to step 604 so that the method continues to dynamically set the load share and monitor whether a load share change is needed.

Although FIG. 6 illustrates one example of a method 600 for load sharing control and electric motor system battery management, various changes may be made to FIG. 6. For example, while shown as a series of steps, various steps in FIG. 6 could overlap, occur in parallel, occur in a different order, occur any number of times, be omitted, or be replaced by other steps. For example, in some embodiments, the method 600 can also include similar steps as steps 514 and 516 in FIG. 5 to further govern torque based on shaft speed. As another example, steps 606-610 may not be repeated on every loop, or may only be performed on a first loop, of the method 600.

It will be understood that the above methods provide for various steady state load sharing logic behavior. For example, in some embodiments, the logic aims for zero power for the electric motor in normal steady-state operation, e.g., by increasing thermal engine power until electric motor power share drops to zero. In some embodiments, the total power of thermal engine 1 should be the total power of thermal engine 1 plus thermal engine 2 (if any) plus electric motor 1 plus electric motor 2 (if any), divided by two, plus a (optional) positive bias to charge the battery at a rate of requested charge power divided by two. As another example, where there are more than one thermal engine and electric motor, the total power of thermal engine 2 should be the total power of thermal engine 1 plus thermal engine 2 plus electric motor 1 plus electric motor 2, divided by two, plus a (optional) positive bias to charge the battery at a rate of requested charge power divided by two.

In some embodiments, each engine can also include an (optional) additional bias to ensure that the electric motor torque is always at least slightly positive or slightly negative to avoid zero torque +/- a placard band of low torque (to avoid chattering of gears for example). This bias could be either positive (e.g. to make the electric motor torque more negative) or negative within certain limits (e.g. to make electric motor torque slightly positive) to avoid reducing engine power by more than an acceptable amount (e.g. 5% maximum to respect, for instance, loss of power control (LOPC) limits of -10% total power).

In some embodiments, as an alternative to the gradual/slow rate of change for torque increases so that there is no interference with speed governing, various embodiments can include a control gain scheduling operation for different engine operation/load conditions. For example, different gain sets design could be used (e.g., large/medium/small) per engine operation.

Although the above examples refer to one thermal engine and one electric motor, it will be understood that the load sharing management processes of this disclosure are applicable to systems including multiple thermal engines and/or multiple electric motors. For example, in some embodiments, electric motor system 110 may comprise multiple electric motors configured in a parallel configuration or in a serial configuration. For example, in some embodiments, the system can include one thermal engine and more than one electric engine. In this case, each engine (thermal, electric, electric...) will be aware of the torque (or power) or the others and each of them can increase their own torque when necessary as per the load sharing operations described in this disclosure. In some embodiments, if a failure of at least one of the electric motors is detected, and the target steady state load share can be altered such that a torque demand is allocated among the electric motors that have not failed while limiting the torque demand to a level appropriate for a capability of the electric motors that have failed. In some embodiments, the system could include two parallel hybrid electric engines driving a common rotor. In this case each electric engine and each thermal engine can have their own controller that is aware of the torque (or power) of the others and each of them can increase their own torque when necessary as per the load sharing operations described in this disclosure.

Also, although the principles of this disclosure can be applied to dissimilar engines (e.g. thermal engines and electric motors having dissimilar characteristics), the principles of this disclosure can also be applied to systems with two identical thermal engines coupled with one or more identical electric motors. For example, the system could include two identical hybrid electric engines with each thermal engine or hybrid engine controller managing its own electric motor(s) according to a predefined rule (e.g. according to the various biases described in this disclosure) as well as an inter-engine matching logic that increases thermal engine power to aim to provide at least as much power or torque as the remote thermal engine.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
determining, via a load sharing management operation (212) of a controller, and based on one or more factors, a target steady state load share for an associated one of a thermal engine (108) or an electric motor system (110) of a hybrid electric powertrain (HEP), the thermal engine (108) and the electric motor system (110) each having a mechanical output coupled to a common power shaft (104) of the HEP;
operating, by the controller, the associated one of the thermal engine (108) or the electric motor system (110) according to the target steady state load share;
determining, by the controller, that a measured load for the associated one of the thermal engine (108) or the electric motor system (110) does not meet the target steady state load share; and
adjusting, by the controller, and based on the target steady state load share, a control setting of the associated one of the thermal engine (108) or the electric motor system (110), resulting in an adjusted load output of the associated one of the thermal engine (108) or the electric motor system (110).

2. The method of claim 1, further comprising:
determining, by another controller via another load sharing management operation (212) executed by the other controller, another target steady state load share for the other one of the thermal engine (108) or the electric motor system (110), wherein the other one of the thermal engine (108) or the electric motor system (110) is associated with the other controller.

3. The method of claim 1 or 2, wherein the controller is associated with the thermal engine, the method further comprising:
applying, by the controller, a positive bias to a load share of the thermal engine (108), wherein the positive bias causes a speed governing operation of the electric motor system (110) to set a load of the electric motor system (110) to a negative value, and causes recharging of a battery associated with the electric motor system (110) in response to the setting of the load of the electric motor system (110) to the negative value.

4. The method of any preceding claim, wherein the controller is associated with the thermal engine (108), the method further comprising:
applying, by the controller, a negative bias to a load share of the thermal engine (108) to skew, according to a shaft speed governing operation of the controller, a load of the electric motor system (110) to a positive value to avoid a reduction in power or torque of the electric motor system (110) below a threshold amount.

5. The method of any preceding claim, wherein the controller is associated with the electric motor system (110), the method further comprising:
applying, by the controller, a positive bias to a load share of the electric motor system (110) to avoid a reduction in power or torque of the electric motor system (110) below a threshold amount.

6. The method of any preceding claim, further comprising:
determining that a shaft speed of the HEP exceeds a shaft speed reference; and
reducing, via a speed governing operation separate from the load sharing management operation (212), the control setting of the associated one of the thermal engine (108) or the electric motor system (110).

7. The method of any preceding claim, wherein the HEP includes one or more thermal engines and a plurality of electric machines of the electric motor system (110), and each one of a plurality of controllers is associated with one of the one or more thermal engines or one of the plurality of electric machines, to operate the associated thermal engine (108) or the associated electric machine according to an associated target steady state load share.

8. A system (100) comprising a controller configured to:
determine, via a load sharing management operation (212) and based on one or more factors, a target steady state load share for an associated one of a thermal engine (108) or an electric motor system (110) of a hybrid electric powertrain (HEP), the thermal engine (108) and the electric motor system (110) each having a mechanical output coupled to a common power shaft (104) of the HEP;
operate the associated one of the thermal engine (108) or the electric motor system (110) according to the target steady state load share;
determine that a measured load for the associated one of the thermal engine (108) or the electric motor system (110) does not meet the target steady state load share; and
adjust, based on the target steady state load share, a control setting of the associated one of the thermal engine (108) or the electric motor system (110), resulting in an adjusted load output of the associated one of the thermal engine (108) or the electric motor system (110).

9. The system (100) of claim 8, further comprising another controller configured to:
determine, via another load sharing management operation (212) executed by the other controller, another target steady state load share for the other one of the thermal engine (108) or the electric motor system (110), wherein the other one of the thermal engine (108) or the electric motor system (110) is associated with the other controller.

10. The system (100) of claim 8 or 9, wherein the controller is associated with the thermal engine (108) and is further configured to:
apply a positive bias to a load share of the thermal engine (108), wherein the positive bias causes a speed governing operation of the electric motor system (110) to set a load of the electric motor system (110) to a negative value, and causes recharging of a battery associated with the electric motor system (110) in response to the setting of the load of the electric motor system (110) to the negative value; and/or
apply a negative bias to a load share of the thermal engine (108) to skew, according to a shaft speed governing operation of the controller, a load of the electric motor system (110) to a positive value to avoid a reduction in power or torque of the electric motor system (110) below a threshold amount; and/or
apply a positive bias to a load share of the electric motor system (110) to avoid a reduction in power or torque of the electric motor system (110) below a threshold amount.

11. The system (100) or method of any preceding claim, wherein the control setting of the associated one of the thermal engine (108) or the electric motor system (110) is increased gradually based on the target steady state load share.

12. The system (100) or method of any of claims 1 to 10, wherein the control setting of the associated one of the thermal engine (108) or the electric motor system (110) is increased according to a control gain schedule, wherein the control gain schedule is based on at least one of operation conditions or load conditions of the associated one of the thermal engine (108) or the electric motor system (110).

13. The system (100) or method of any preceding claim, wherein the one or more factors include at least one of:
a power demand of the HEP;
a total load demand of the HEP;
a maximum load limit for the thermal engine (108);
a minimum load limit for the electric motor system (110);
a maximum load limit for the electric motor system (110);
a minimum negative load limit for the electric motor system (110);
a state of charge of a battery associated with the electric motor system (110);
a battery recharge rate limit of the battery; or
a temperature of the battery associated with the electric motor system (110).

14. The system (100) of any of claims 8 to 13, wherein the controller is further configured to:
determine that a shaft speed of the HEP exceeds a shaft speed reference; and
reduce, via a speed governing operation separate from the load sharing management operation (212), the control setting of the associated one of the thermal engine (108) or the electric motor system (110).

15. The system (100) of any of claims 8 to 14, wherein the HEP includes one or more thermal engines and a plurality of electric machines of the electric motor system (110), and the system (100) further comprising:
a plurality of controllers, wherein each one of the plurality of controllers is associated with one of the one or more thermal engines or one of the plurality of electric machines, to operate the associated thermal engine (108) or the associated electric machine according to an associated target steady state load share.
